# EUROPÄISCHE PATENTSCHRIFT

(11) **EP 2 861 656 B1**
(45) Veröffentlichungstag und Bekanntmachung des Hinweises auf die Patenterteilung: **08.08.2018**
(21) Anmeldenummer: 13727593.9
(22) Anmeldetag: 05.06.2013
(51) Int. Cl.: C08K 3/04

(54) **VULKANISIERTE KAUTSCHUKMISCHUNG**
VULCANIZED RUBBER MIXTURE
MÉLANGE DE CAOUTCHOUC VULCANISÉ

(30) Priorität: 15.06.2012 DE 102012105209
(43) Veröffentlichungstag der Anmeldung: 22.04.2015
(73) Patentinhaber: ContiTech AG, 30165 Hannover (DE)
(72) Erfinder: KARASEWITSCH, Eugenie, 30177 Hannover (DE); HERRMANN, Wolfram, 31515 Wunstorf (DE); SOSTMANN, Stefan, 30855 Langenhagen (DE)
(74) Vertreter: Preusser, Andrea
(86) Internationale Anmeldenummer: PCT/EP2013/061524
(87) Internationale Veröffentlichungsnummer: WO 2013/186091

(56) Entgegenhaltungen:
- DE-A1-102008 007 993
- US-A1- 2011 200 356

## Beschreibung

Die Erfindung betrifft eine vulkanisierte rußhaltige Kautschukmischung, insbesondere für technische Kautschukartikel, insbesondere Gurte, Riemen, Drucktücher, Luftfedern und Schläuche.

Die elektrische Leitfähigkeit von elastomeren Werkstoffen, die für die Herstellung von technischen Kautschukartikeln benötigt werden, wird durch die Zugabe elektrisch leitender Füllstoffe eingestellt. Dabei werden insbesondere Ruß, als auch Kohlenstoffnanoröhren, Graphit, Carbonfasern, etc. als Füllstoffe verwendet.

Leitfähige Werkstoffe aus Elastomeren enthalten die genannten Füllstoffe zur Optimierung der Werkstoffeigenschaften. Dabei zählt Ruß zu den wichtigsten Füllstoffen in der Kautschukindustrie. Ruße werden in zwei grobe Klassen eingeteilt. Zum einen in die Klasse der aktiven Ruße, die eine Verstärkung der mechanischen Eigenschaften durch Kautschuk-Füllstoff-Wechselwirkungen besitzen. Diese werden daher üblicherweise in Kautschukmischungen verwendet. Zum anderen in die Klasse der inaktiven Ruße, die nahezu keinen Einfluss auf die mechanischen Eigenschaften des Werkstoffs besitzen. Oft finden derartige Ruße Verwendung als Pigmentruße z. Bsp. für Tinten, siehe auch EP 2 196 507 A1.

Die verstärkend wirkenden aktiven Ruße zeichnen sich in der Regel auch durch gute elektrische Leitfähigkeitseigenschaften aus, d.h dass schon bei einer relativ geringen Konzentration des Rußes eine hohe elektrische Leitfähigkeit im Werkstoff einstellbar ist. Nachteilig hierbei ist jedoch, dass nicht gleichzeitig ein elastomerer Werkstoff mit niedriger mechanischer Verstärkung und gleichzeitig hoher Leitfähigkeit hergestellt werden kann.

Kommerzielle (handelsübliche) Furnace-Ruße können über den Grad ihrer Oxidation den elektrischen Widerstand der elastomeren Werkstoffe beeinflussen. Das Verfahren der Oxidation ist beispielsweise aus EP 1 316 590 A1, US 3,565,657, US 3,330,799, DE 3813678 A1 bekannt.

In US 3,330,799 ist eine Steigerung des elektrischen Widerstandes durch die Oxidation beschrieben, allerdings ohne eine mögliche Herabsenkung des Widerstandes zu diskutieren, während US 4,075,140 eine Reduzierung des Spannungswertes (Modul) bei rußgefüllten elastomeren Werkstoffen in Abhängigkeit des Oxidationsgrades des verwendeten Rußes beschrieben wird.

Die Verwendung von Kohlenstoffnanoröhren in elastomeren Werkstoffen führt ebenfalls zur Erhöhung der Leitfähigkeit. Da schon geringste Mengen ausreichen, ist die Verstärkung der mechanischen Eigenschaften gering. Jedoch ist die Dispergierung von Kohlenstoffnanoröhren äußerst schwierig und insbesondere durch die Partikelgröße im Nanometerbereich weisen sie ein erhöhtes Gesundheitsrisiko in der Verarbeitung auf.

Die vorliegende Erfindung hat daher die Aufgabe, eine vulkanisierte Kautschukmischung bereitzustellen, die sich dadurch auszeichnet, dass sie den Zielkonflikt zwischen hoher elektrischer Leitfähigkeit und geringer Verstärkungswirkung löst. Dies bedeutet, dass die vulkanisierte Kautschukmischung eine ausreichend hohe elektrische Leitfähigkeit bei gleichzeitig geringer Verstärkung, d.h. einem hohen Füllgrad ohne Beeinträchtigung der mechanischen Eigenschaften, aufweist.

Gelöst wird diese Aufgabe dadurch, dass die vulkanisierte rußhaltige Kautschukmischung, wenigstens einen polaren oder unpolaren Kautschuk und wenigstens einen Ruß mit einem ph-Wert gemäß ISO 787-9 zwischen 2,8 und 6 und weitere Zusatzstoffe enthält.

Es wurde gefunden, dass eine vulkanisierte Kautschukmischung, welche wenigstens einen Ruß mit einem ph-Wert gemäß ISO 787-9 zwischen 2,8 und 6 enthält, eine hohe Leitfähigkeit und gleichzeitig eine geringe Verstärkung besitzt. Dadurch wird der oben genannte Zielkonflikt gelöst bzw. zumindest auf ein signifikant niedrigeres Niveau gebracht.

Erfindungsgemäß enthält die vulkanisierte Kautschukmischung wenigstens einen polaren oder unpolaren Kautschuk.

Der polare oder unpolare Kautschuk ist dabei ausgewählt aus der Gruppe, bestehend aus natürlichem Polyisopren und / oder synthetischem Polyisopren und / oder Butadien-Kautschuk und / oder Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder Ethylen-Propylen-Mischpolymerisat und / oder Ethylen-Propylen-Dien-Mischpolymerisat (EPDM) und / oder (teil)hydrierter Nitrilkautschuk und / oder Butylkautschuk und / oder Brombutylkautschuk und / oder Chlorbutylkautschuk und / oder Chloriertes Polyethylen und / oder Chlorsulfoniertes Polyethylen und / oder Polyepichlorhydrin und / oder Ethylen-Vinylacetat-Kautschuk und / oder Acrylat-Kautschuk und / oder Fluorierter Methylsiliconkautschuk und / oder Perfluorenierter Propylen-Kautschuk und / oder Perflurocarbon-Kautschuk und / oder Polyurethan. Erfindungsgemäss enthält die Kautschukmischung wenigstens einen polaren oder unpolaren Kautschuk, der ausgewählt ist aus der Gruppe bestehend aus Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk, wobei ganz besonders bevorzugt wenigstens einer dieser Kautschuke in Mengen von wenigstens 50 phr vorhanden sein sollte.

Derartige Kautschuke kommen bei der Herstellung von technischen Kautschukartikeln, wie Gurte, Riemen, Drucktücher und Schläuche, zum Einsatz.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Natürliches Polyisopren und / oder synthetisches Polyisopren und / oder Butadien-Kautschuk und / oder Styrolbutadienkautschuk finden oft Verwendung als Kautschukkomponente für Fahrzeugreifen.

Insbesondere die genannten Kautschuke, die Dienkautschuke sind, können mit verschiedenen Gruppen modifiziert bzw. funktionalisiert sein.

In einer besonders geeigneten Ausführungsform sind diese Kautschuke allerdings unfunktionalisiert, d.h. nicht-funktionalisiert, da die durch die Funktionalisierung bedingte erhöhte Wechselwirkung zwischen Füllstoff und Kautschuk für die vorliegende Erfindung wenig relevant bzw. durch die mit der Wechselwirkung verbundene Verstärkungswirkung unerwünscht und sogar eher negativ ist.

Des Weiteren können in der erfindungsgemäßen Kautschukmischung noch weitere Polymere und Elastomere vorhanden sein, wie beispielsweise thermoplastische Elastomere (TPE), Thermoplasten (TP), anorganische Polymere, ataktische Polymere, isotaktische Polymere, biologisch abbaubare Polymere (bspw. Polylactide), Polycarbosilane, elektrisch leitfähige Polymere.

Erfindungswesentlich ist weiterhin, dass die Kautschukmischung wenigstens einen Ruß mit einem ph-Wert gemäß ISO 787-9 zwischen 2,8 und 6, bevorzugt zwischen 3 und 5 phr, enthält.

Der ph-Wert des Rußes ist korreliert mit der Anzahl der oberflächenaktiven OH-Gruppen des Rußes und dient als Maß für die Charakterisierung oxidierter Ruße.

Der Ruß wird in einer bevorzugten Ausführungsform in Mengen von 5 bis 100 phr, besonders bevorzugt in Mengen von 10 bis 80 phr, ganz besonders bevorzugt in Mengen von 20 bis 60 phr, eingesetzt. In einer besonders bevorzugten Ausführungsform hat der Ruß eine Ölabsorptionszahl (OAN) gemäß ISO 4656, zwischen 90 bis 150 ml/100g, bevorzugt zwischen 110 und 150 ml/100g und / oder eine BET-Zahl gemäß ISO 4652 zwischen 20 bis 200 m²/g, bevorzugt zwischen 30 und 180 m²/g. Die OAN-Zahl ist hierbei eine wichtige Größe für die Bestimmung der Struktur des Rußes, während mittels der BET-Zahl die spezifische Oberfläche des Rußes angegeben werden kann.

In der erfindungsgemäßen Kautschukmischung kann durchaus noch wenigstens ein weiterer Ruß, dessen Eigenschaften von den oben genannten Eigenschaften abweichen, vorhanden sein. Im Fall eines derartigen Gemisches aus zwei oder mehr unterschiedlichen Rußen, ist der Anteil des Rußes mit einem ph-Wert gemäß ISO 787-9 zwischen 2,8 und 6 immer größer als der Massenanteil der weiteren Ruße in Summe bezogen auf die Gesamtmasse aller vorhandenen Ruße.

Die Kautschukmischung kann neben Ruß auch noch weitere Füllstoffe wie Kieselsäure, Aluminiumhydroxid, Schichtsilikate, Kalk, Kreide, Stärke, Magnesiumoxid, Titandioxid, Kautschukgele, Kurzfasern usw. in beliebigen Kombinationen enthalten.

In einer besonderen Ausführungsform ist die vulkanisierte Kautschukmischung allerdings frei von weiteren Füllstoffen und enthält nur den oben genannten Ruß mit einem ph-Wert gemäß ISO 787-9 zwischen 2,8 und 6 als alleinigen Füllstoff.

Es können in der Kautschukmischung 0,1 bis 150 phr, bevorzugt 1 bis 80 phr zumindest eines Weichmachers vorhanden sein. Dieser Weichmacher ist bevorzugt ausgewählt aus der Gruppe, bestehend aus Mineralölen und / oder synthetischen Weichmachern und / oder Fettsäuren und / oder Fettsäurederivaten und / oder Harzen und / oder Faktisse und / oder Glyceriden und / oder flüssigen Polymeren und / oder Terpenen und / oder Saatenölen und / oder Biomass-To-Liquid-Ölen und / oder Rubber-To-Liquid-Ölen.

Weiterhin enthält die Kautschukmischung noch weitere Zusatzstoffe.

Weitere Zusatzstoffe beinhaltet im Wesentlichen ggf. das Vernetzungssystem (Vernetzer, Schwefelspender und / oder elementarer Schwefel, Peroxide, Beschleuniger und Verzögerer), Ozonschutzmittel, Alterungsschutzmittel, Mastikationshilfsmittel, Verarbeitungshilfsmittel und weitere Aktivatoren.

Der Mengenanteil der Gesamtmenge an weiteren Zusatzstoffen beträgt 2 bis 150 phr, bevorzugt 3 bis 100 phr und besonders bevorzugt 5 bis 80 phr.

Die Vernetzung der Kautschukmischung erfolgt vorzugsweise durch Schwefelvernetzung mittels elementarem Schwefel, der auch als freier Schwefel bezeichnet wird, und / oder Schwefelspendern, wobei einige Schwefelspender zugleich als Vulkanisationsbeschleuniger bekannt sind, oder mittels peroxidischer Vernetzung.

Die peroxidische Vernetzung findet insbesondere bei technischen Kautschukartikeln, wie beispielsweise Schläuchen, Verwendung.

Ebenso kann die Kautschukmischung durch Strahlenvernetzung mittels Elektronenstrahlen vernetzt sein.

Die Erfindung soll nun anhand von Vergleichs- und Ausführungsbeispielen, die in Tabellen 1 zusammengefasst sind, näher erläutert werden. Die mit "E" gekennzeichneten Mischungen sind hierbei Mischungen für erfindungsgemäße Gummiartikel, während es sich bei den mit "V" gekennzeichneten Mischungen um Vergleichsmischungen handelt. Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in mehreren Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur gemäß DIN 53 505
- Spannungswert bei 200% Dehnung (Modul 200), jeweils längs und quer, bei Raumtemperatur gemäß DIN 53 504
- Zugfestigkeit bei Raumtemperatur gemäß DIN 53 504
- Elektrischer Widerstand gemäß DIN IEC 60093

Folgende Ruße, alle von der Firma Orion Engineered Carbons, wurden in der Tabelle 1 verwendet:

| | ph-Wert (ISO 787-9) | OAN-Zahl (ISO 4656) | BET-Zahl (ISO 4652) | Handelsname |
|---|---|---|---|---|
| **Ruß 1** | 3,3 | 100 | 30 | Special Black 100 |
| **Ruß 2** | ca. 7 | 90-100 | 30-40 | Ausgangsruß |
| **Ruß 3** | >7 | 90 | 34 | N660 |
| **Ruß 4** | 3,0 | 115 | 180 | Special Black 4 |
| **Ruß 5** | 4,5 | 115 | 92 | Printex V |

**Tabelle 1**

| **Bestandteile** | **Einheit** | **V1** | **V2** | **E1** | **E2** | **E3** | **V3** | **V4** | **E4** |
|---|---|---|---|---|---|---|---|---|---|
| Kautschuk ^{a} | phr | 100 | 100 | 100 | 100 | 100 | 100 | 100 | 100 |
| Ruß 1 | phr | -- | -- | 40 | -- | -- | -- | -- | 40 |
| Ruß 2 | phr | 40 | -- | -- | -- | -- | 40 | -- | -- |
| Ruß 3 | phr | -- | 40 | -- | -- | -- | -- | 40 | -- |
| Ruß 4 | phr | -- | -- | -- | 40 | -- | -- | -- | -- |
| Ruß 5 | phr | -- | -- | -- | -- | 40 | -- | -- | -- |
| ZDP^{b} | phr | 2 | 2 | 2 | 2 | 2 | -- | -- | -- |
| Zinkoxid | phr | 5 | 5 | 5 | 5 | 5 | 5 | 5 | 5 |
| Zusatzstoffe ^{c} | phr | 4 | 4 | 4 | 4 | 4 | 4 | 4 | 4 |
| Beschleuniger ^{d} | phr | 2,45 | 2,45 | 2,45 | 2,45 | 2,45 | -- | -- | -- |
| Schwefel | phr | 0,75 | 0,75 | 0,75 | 0,75 | 0,75 | -- | -- | -- |
| Peroxid ^{e} | phr | -- | -- | -- | -- | -- | 4 | 4 | 4 |

| **Eigenschaft** | | | | | | | | | |
|---|---|---|---|---|---|---|---|---|---|
| Härte | ShA | 61 | 61 | 61 | 64 | 63 | 65 | 65 | 63 |
| Modul 200 längs | MPa | 3,8 | 5,0 | 5,0 | 5,2 | 5,0 | 7,5 | 9,7 | 10,1 |
| Modul 200 quer | MPa | 4,4 | 5,3 | 4,9 | 4,8 | 5,1 | 7,8 | 10,3 | 9,6 |
| Zugfestigkeit quer | MPa | 11,9 | 11,9 | 9,2 | 12,3 | 17,5 | 12,7 | 13,2 | 11,1 |
| Zugfestigkeit längs | MPa | 11,7 | 12,3 | 9,1 | 10,5 | 16,7 | 12,4 | 13,1 | 10,4 |
| Widerstand | kOhm | 5,7 *10³ | 3,0 *10⁶ | 77 | 4 | 55 | 5,0 *10⁹ | 2,0 *10⁸ | 1500 |

| | | | | | | | | | |
|---|---|---|---|---|---|---|---|---|---|
| ^{a} EPDM, BUNA EP G 3440, Fa. Lanxess ^{b} Zinkalkyldithiophosphat ^{c} Stearinsäure, Polyglykol ^{d} TBzTD und MBT ^{e} Di(tert-butylperoxyisopropyl)benzen | | | | | | | | | |

Aus Tabelle 1 ist eindeutig zu erkennen, dass der Zielkonflikt zwischen hoher Leitfähigkeit, d.h. reduziertem Widerstand, und geringer Verstärkungswirkung, d.h. hohen Spannungs- und / oder Zugfestigkeitswerten, nur gelöst werden kann, wenn die vulkanisierte Kautschukmischung einen Ruß enthält, der einen ph-Wert zwischen 2,8 und 6 phr aufweist.

## Patentansprüche

1. Vulkanisierte Kautschukmischung, **dadurch gekennzeichnet, dass** sie
- wenigstens einen polaren oder unpolaren Kautschuk, welcher ausgewählt ist aus der Gruppe bestehend aus Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und
- wenigstens einen Ruß mit einem ph-Wert gemäß ISO 787-9 zwischen 2,8 und 6 enthält.

2. Vulkanisierte Kautschukmischung nach Anspruch 1, **dadurch gekennzeichnet, dass** sie wenigstens 50 phr Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk enthält.

3. Vulkanisierte Kautschukmischung nach einem der Ansprüche 1 bis 2, **dadurch gekennzeichnet, dass** sie 5 bis 100 phr wenigstens eines Rußes mit einem ph-Wert gemäß ISO 787-9 zwischen 2,8 und 6 enthält.

4. Vulkanisierte Kautschukmischung nach einem der Ansprüche 1 bis 3, **dadurch gekennzeichnet, dass** der Ruß einen ph-Wert gemäß ISO 787-9 zwischen 3 und 5 besitzt.

5. Vulkanisierte Kautschukmischung nach einem der Ansprüche 1 bis 4, **dadurch gekennzeichnet, dass** sie peroxidisch oder mit Hilfe von Schwefel vernetzt ist.

6. Verwendung einer vulkanisierten Kautschukmischung gemäß einem der Ansprüche 1 bis 5 zur Herstellung von technischen Kautschukartikeln, insbesondere Gurte, Riemen, Drucktücher oder Schläuche.

## Claims

1. Vulcanized rubber mixture, **characterized in that** it contains
- at least one polar or nonpolar rubber selected from the group consisting of polynorbornenes and/or isoprene-isobutylene copolymer and/or ethylene-propylene-diene rubber and/or nitrile rubber and/or chloroprene rubber and/or acrylate rubber and/or fluororubber and
- at least one carbon black having a pH according to ISO 787-9 between 2.8 and 6.

2. Vulcanized rubber mixture according to Claim 1, **characterized in that** it contains at least 50 phr of polynorbornene and/or isoprene-isobutylene copolymer and/or ethylene-propylene-diene rubber and/or nitrile rubber and/or chloroprene rubber and/or acrylate rubber and/or fluororubber.

3. Vulcanized rubber mixture according to either of Claims 1 to 2, **characterized in that** it contains 5 to 100 phr of at least one carbon black having a pH according to ISO 787-9 between 2.8 and 6.

4. Vulcanized rubber mixture according to any of Claims 1 to 3, **characterized in that** the carbon black has a pH according to ISO 787-9 between 3 and 5.

5. Vulcanized rubber mixture according to any of Claims 1 to 4, **characterized in that** it is crosslinked peroxidically or with the aid of sulphur.

6. Use of a vulcanized rubber mixture according to any of Claims 1 to 5 for producing industrial rubber articles, in particular belts, drive belts, printing blankets or hoses.

## Revendications

1. Mélange de caoutchouc vulcanisé,
**caractérisé en ce qu'**il contient
au moins un caoutchouc polaire ou non polaire sélectionné dans l'ensemble constitué du polynorbornène, des copolymères d'isoprène et d'isobutylène, d'un caoutchouc à l'éthylène-propylène-diène, du caoutchouc nitrile, du caoutchouc au chloroprène, du caoutchouc à l'acrylate et/ou du caoutchouc fluoré et
au moins une suie dont la valeur du pH selon ISO 787-9 est comprise entre 2,8 et 6.

2. Mélange de caoutchouc vulcanisé selon la revendication 1, **caractérisé en ce qu'**il contient au moins 50 phr de polynorbornène, de copolymères d'isoprène et d'isobutylène, d'un caoutchouc à l'éthylène-propylène-diène, de caoutchouc nitrile, de caoutchouc au chloroprène, de caoutchouc à l'acrylate et/ou de caoutchouc fluoré.

3. Mélange de caoutchouc vulcanisé selon l'une des revendications 1 et 2, **caractérisé en ce qu'**il contient de 5 à 100 phr d'au moins une suie dont la valeur du pH selon ISO 787-9 est comprise entre 2,8 et 6.

4. Mélange de caoutchouc vulcanisé selon l'une des revendications 1 à 3, **caractérisé en ce que** la valeur du pH de la suie selon ISO 787-9 est comprise entre 3 et 5.

5. Mélange de caoutchouc vulcanisé selon l'une des revendications 1 à 4, **caractérisé en ce qu'**il est réticulé par peroxydation ou à l'aide de soufre.

6. Utilisation d'un mélange de caoutchouc vulcanisé selon l'une des revendications 1 à 5 pour la fabrication d'articles techniques en caoutchouc, en particulier des ceintures, des courroies, des tampons d'impression ou des tuyaux flexibles.
